# EUROPÄISCHE PATENTSCHRIFT

(11) **EP 2 113 404 B1**
(45) Veröffentlichungstag und Bekanntmachung des Hinweises auf die Patenterteilung: **24.10.2012**
(21) Anmeldenummer: 08173079.8
(22) Anmeldetag: 30.12.2008
(51) Int. Cl.: B60D 1/14

(54) **Kraftfahrzeug mit Anhängekupplung**
Automobile with tow bar
Véhicule automobile avec attelage

(30) Priorität: 28.02.2008 DE 102008012621; 18.08.2008 DE 102008039807
(43) Veröffentlichungstag der Anmeldung: 04.11.2009
(73) Patentinhaber: Scambia Industrial Developments Aktiengesellschaft, 9494 Schaan (LI)
(72) Erfinder: Haustein, Hartmut, 75446, Wiernsheim (DE); Rimmelspacher, Bernhard, 76287, Rheinstetten (DE); Wegner, Bert, 73333, Gingen (DE); Riehle, Jörg, 71679, Asperg (DE)
(74) Vertreter: Hoeger, Stellrecht & Partner Patentanwälte

(56) Entgegenhaltungen:
- EP-A- 0 799 732
- EP-A- 1 380 444
- EP-A- 1 873 019
- DE-A- 2 815 703
- DE-U1-202006 008 462
- US-B1- 6 199 890
- US-B2- 6 659 518

## Beschreibung

Die Erfindung betrifft ein Kraftfahrzeug mit einer Anhängekupplung gemäß dem Oberbegriff des Anspruchs 1.

Derartige Anhängekupplungen sind aus dem Stand der Technik, beispielsweise der DE 28 15 703 A1 bekannt.

Bei diesen bekannten Lösungen besteht das Problem, die Anhängekupplung, insbesondere den Querträger, möglichst steif in optimaler Form auszuführen.

Diese Aufgabe wird bei einem Kraftfahrzeug mit einer Anhängekupplung der eingangs beschriebenen Art erfindungsgemäß durch die Merkmale des Anspruchs 1 gelöst.

Eine derartige Anordnung der Montagebasis im Innenraum des Querträgers schafft die Möglichkeit, die durch die Ausbildung des Querträgers als Verstrebungsstruktur gegebenen Möglichkeiten optimal auszunutzen und somit die durch die Verstrebungsstruktur zu schaffenden Innenräume für die Anordnung der Montagebasis zu nutzen.

Die Montagebasis kann dabei als beliebig gestalteter Körper ausgeführt sein. Eine konstruktiv besonders einfache Lösung sieht vor, dass die Montagebasis als Platte ausgebildet ist.

Vorteilhaft ist es wenn der Querträger im Bereich der Seitenträger einen minimalen Querschnitt aufweist und der Querträger in einem mittigen Bereich einen maximalen Querschnitt aufweist, der größer ist als der minimale Querschnitt.

Der Vorteil der erfindungsgemäßen Lösung ist darin zu sehen, dass damit eine optimale Montage des Kugelhalses an der Montagebasis möglich ist. Es werden außerdem auch eine optimale Steifigkeit sowie ein günstiges Crashverhalten durch möglichst große Deformationswege des Querträgers bei möglichst geringem Gewicht erzielt.

Besonders günstig ist, wenn sich der Querschnitt des Querträgers in dessen Verlauf von den Seitenträgern bis zum mittigen Bereich zunehmend vergrößert.

Eine besonders vorteilhafte Lösung sieht vor, dass sich der Querschnitt des Querträgers in dessen Verlauf von den Seitenteilen bis zu einem maximalen Querschnitt im mittigen Bereich um einen Faktor von mindestens zwei, noch besser mindestens 3 vergrößert.

Noch besser ist es, wenn sich der Querschnitt des Querträgers um einen Faktor von mindestens dreieinhalb, noch besser mindestens vier vergrößert.

Besonders günstig für die Stabilität des Querträgers ist es, wenn sich der Querträger in Vertikalrichtung senkrecht zu einer horizontalen Ebene von den Seitenträgern bis zum mittigen Bereich vergrößert.

Zweckmäßigerweise vergrößert sich der Querschnitt dabei in der Vertikalrichtung mindestens um einen Faktor zwei, noch besser mindestens um einen Faktor zweieinhalb.

Hinsichtlich der Ausbildung der Verstrebungsstruktur des Querträgers wurden bislang keine näheren Angaben gemacht.

So könnte der Querträger grundsätzlich in jeder Art von Verstrebungsstruktur ausgebildet sein.

Eine besonders günstige Lösung sieht vor, dass der Querträger einen vorderen fahrbahnabgewandten Längsgurt aufweist.

Alternativ oder ergänzend ist vorzugsweise vorgesehen, dass der Querträger einen vorderen fahrbahnzugewandten Längsgurt aufweist.

Eine Lösung sieht vor, dass der Querträger mindestens einen vorderen und mindestens einen hinteren Längsgurt aufweist.

Weiterhin ist es zweckmäßig, wenn der Querträger mindestens einen hinteren fahrbahnabgewandten Längsgurt aufweist.

Eine weitere zweckmäßige Lösung sieht vor, dass der Querträger einen hinteren fahrbahnzugewandten Längsgurt aufweist.

Eine weitere günstige Ausführungsform sieht vor, dass der Querträger einen mittigen hinteren Längsgurt aufweist.

Das Verwenden von einem oder mehreren Längsgurten hat den Vorteil eines optimalen Crashverhaltens, da eine Knickverformung eine günstige Energieabsorption aufweist.

Um eine einfache Verbindung mit den Seitenträgern herzustellen erstreckt sich der jeweilige Längsgurt zwischen Halteabschnitten der Seitenträger und diese sind insbesondere fest mit den Halteabschnitten verbunden.

Um den Längsgurten eine ausreichende Stabilität relativ zueinander zu verleihen, ist vorzugsweise vorgesehen, dass der Querträger mindestens eine zwischen mindestens einem Teil der Längsgurte wirksame Versteifungseinheit aufweist.

Die Versteifungseinheit kann dabei in unterschiedlichster Art und Weise ausgebildet sein.

Eine vorteilhafte Lösung sieht vor, dass die Versteifungseinheit sich zweidimensional in einer Fläche erstreckt und insbesondere in diesen zweidimensional versteifend wirkt.

Beispielsweise kann die Fläche eine Ebene sein oder eine beliebig gekrümmte Fläche.

Vorzugsweise kann auch dabei die Versteifungseinheit als mit Durchbrüchen versehenes flächenhaftes Element ausgebildet sein.

Es ist aber auch denkbar, die Versteifungseinheit aus einer oder mehreren Streben auszubilden.

Vorzugsweise ist dabei die Versteifungseinheit als Querversteifungseinheit ausgebildet und die Fläche erstreckt sich quer zu den Längsgurten.

Damit ist eine optimale Versteifung des Querträgers möglich.

Hinsichtlich der Ausbildung der Versteifungseinheit sieht eine besonders vorteilhafte Lösung vor, dass die Versteifungseinheit als Flachmaterialteil ausgebildet ist, da ein derartiges Flachmaterialteil in einfacher Weise herstellbar ist und insbesondere auch dadurch, dass es zusätzlich gegebenenfalls mit Durchbrüchen versehen sein kann, hinsichtlich seiner Versteifungsfunktion einerseits leicht und andererseits optimal steif ausgebildet werden kann.

Besonders günstig ist es dabei, wenn die Versteifungseinheit mit mindestens einem Teil der Längsgurte des Querträgers fest verbunden ist.

Noch vorteilhafter ist es, wenn die Versteifungseinheit mit allen Längsgurten des Querträgers fest verbunden ist.

Hinsichtlich der Anordnung der Versteifungseinheit sind bislang ebenfalls keine näheren Angaben gemacht.

Eine zweckmäßige Lösung sieht vor, dass der Querträger symmetrisch zu einer Längsmittelebene angeordnete Versteifungseinheiten aufweist.

Ferner ist vorzugsweise ebenfalls vorgesehen, dass nahe der Längsmittelebene eine oder mehrere Versteifungseinheiten vorgesehen sind.

Eine besonders zweckmäßige Lösung sieht vor, dass die Montagebasis Teil einer Versteifungseinheit, insbesondere einer nahe oder in der Längsmittelebene liegenden Versteifungseinheit ist.

Um die Torsionssteifigkeit des Querträgers optimal zu gestalten, sieht eine vorteilhafte Lösung der erfindungsgemäßen Aufgabe vor, dass der Querträger mit Torsionsversteifungselementen versehen ist.

Die Torsionsversteifungselemente können dabei schalenähnlich oder teilschalenähnlich, insbesondere halbschalenähnlich, ausgebildet sein.

Derartige Torsionsversteifungselemente sind vorzugsweise hülsenförmig oder röhrenförmig ausgebildet, wobei eine derartige hülsenförmige oder röhrenförmige Ausbildung auch eine konische Form und ebenfalls alle erdenkbaren Querschnittsformen wie rund, oval oder vieleckig einschließt.

Eine zweckmäßige Lösung sieht dabei vor, dass die Torsionsversteifungselemente sich ausgehend von den Halteabschnitten der Seitenträger zu mindest einer Versteifungseinheit erstrecken und mit dem jeweiligen Halteabschnitt und der mindestens einen Versteifungseinheit torsionsfest verbunden sind.

Damit ist die Möglichkeit gegeben, durch die torsionsfeste Verbindung der Versteifungseinheiten mit den Halteabschnitten insgesamt dem Querträger eine optimierte Torsionssteifigkeit zu verleihen.

Bei einer weiteren vorteilhaften Lösung sind der eingangs genannten Aufgabe zur Verbesserung der Torsionssteifigkeit mindestens zwei der Längsgurte durch sich parallel zu Längsabschnitten der Längsgurte zweidimensional erstreckende und zweidimensional versteifende Flächenelemente miteinander verbunden.

Derartige versteifende Flächenelemente sind beispielsweise an den Längsabschnitten der Längsgurte fixiert, wobei die Fixierung entweder punktuell oder längs des gesamten Längsabschnitts des Längsgurts erfolgt. Dabei können die Flächenelemente in unterschiedlichsten Formen ausgebildet sein.

Vorzugsweise ist vorgesehen, dass die versteifenden Flächenelemente aus Flachmaterial ausgebildet sind.

Eine derartige Ausbildung aus Flachmaterial erlaubt es einerseits eine optimale Steifigkeit zu erzielen und andererseits das Flächenelement möglichst leicht zu gestalten, beispielsweise durch Vorsehen von Durchbrüchen in dem Flachmaterial.

Eine besonders günstige Lösung sieht dabei vor, dass mindestens eines der Flächenelemente als Versteifung im Bereich eines Aufnahmeraums für einen Kugelhals des Querträgers angeordnet ist und somit insbesondere die Möglichkeit schafft, den Aufnahmeraum einerseits möglichst groß und voluminös zu gestalten, andererseits im Bereich des Aufnahmeraums auch die Steifigkeit, insbesondere die Torsionssteifigkeit des Querträgers zu erhalten.

Noch besser ist es, wenn der Aufnahmeraum auf mehreren Seiten durch Flächenelemente begrenzt ist, so dass dadurch die Möglichkeit geschaffen ist, die Torsionssteifigkeit noch weiter zu verbessern.

Beispielsweise lässt sich durch eines oder mehrere Flächenelemente der Aufnahmeraum in der Art einer Schale oder mindestens einer Teilschale umfassen um eine günstige Steifigkeit zu erreichen.

Dabei kann die Schale oder Teilschale mit einem Durchbruch versehen, um durch diesen den Kugelhals in den Aufnahmeraum hinein oder aus diesem heraus bewegen zu können.

Ferner wurden hinsichtlich der Anordnung der Montagebasis im Zusammenhang mit der Erläuterung der einzelnen Ausführungsbeispiele ebenfalls keine näheren Angaben gemacht.

Beispielsweise könnte die Montagebasis - wie aus dem Stand der Technik bekannt - an einer Unterseite des Querträgers angeordnet sein.

Hinsichtlich der Verbindung der Montagebasis mit der Verstrebungsstruktur, insbesondere den Längsgurten des Querträgers wurden bislang keine näheren Angaben gemacht.

So sieht eine vorteilhafte Lösung vor, dass die Montagebasis mit dem vorderen fahrbahnabgewandten Längsgurt verbunden ist.

Alternativ oder ergänzend ist vorzugsweise vorgesehen, dass die Montagebasis mit dem vorderen fahrbahnzugewandten Längsgurt verbunden ist.

Ferner ist alternativ oder ergänzend vorgesehen, dass die Montagebasis mit dem hinteren fahrbahnabgewandten Längsgurt verbunden ist.

Um eine sichere Verbindung der Montagebasis mit dem Querträger zu erreichen ist ferner vorzugsweise vorgesehen, dass die Montagebasis in einem hinteren fahrbahnzugewandten Bereich über mindestens eine Strebe an mindestens einem der Längsgurte abgestützt ist.

Vorzugsweise erfolgt dabei mindestens eine Abstützung der Montagebasis an dem hinteren fahrbahnzugewandten Längsgurt.

Ferner ist es zweckmäßig, wenn die Montagebasis noch zusätzlich an weiteren Längsgurten, beispielsweise dem hinteren mittleren Längsgurt abgestützt ist.

Bei einer Ausführung könnte die Anhängekupplung einen mit der Montagebasis abnehmbar verbundenen Kugelhals aufweisen, so dass der Kugelhals nach Gebrauch in seiner Arbeitsstellung von dem Querträger abnehmbar ist, um den Kugelhals in einer Ruhestellung aufzubewahren, wobei erfindungsgemäß die Aufnahme für den abnehmbaren Kugelhals im Innenraum des Querträgers angeordnet ist.

Alternativ dazu ist vorgesehen, dass der Kugelhals an der Montagebasis über ein Gelenk, das heißt ein einachsiges oder ein mehrachsiges Gelenk, gelagert ist und durch das Gelenk von einer Arbeitsstellung in eine Ruhestellung verschwenkbar ist. Vorzugsweise ist auch ein derartiges Gelenk im Innenraum des Querträgers angeordnet.

Unabhängig davon, ob der Kugelhals abnehmbar oder verschwenkbar ist, schafft die erfindungsgemäße Lösung mit einer Verstrebungsstruktur des Querträgers die Möglichkeit, dass der Kugelhals in einer Ruhestellung im Innenraum des Querträgers deponiert ist, wobei der Innenraum des Querträgers einen Aufnahmeraum für den Kugelhals in Ruhestellung bildet.

Vorzugsweise ist dabei vorgesehen, dass der Aufnahmeraum über eine zwischen benachbarten Längsgurten liegende Öffnung zugänglich ist.

Vorzugsweise liegt dabei die Öffnung auf einer fahrbahnzugewandten Seite des Querträgers, vorzugsweise zwischen den zwei fahrbahnzugewandten Längsgurten des Querträgers.

Eine andere Lösung sieht vor, beispielsweise im Fall eines abnehmbaren Kugelhalses, dass der Aufnahmeraum durch eine Öffnung zugänglich ist, die auf einer fahrbahnabgewandten Seite des fahrbahnzugewandten Längsgurts, insbesondere des hinteren fahrbahnzugewandten Längsgurts liegt, so dass dadurch der abnehmbare Kugelhals mit der Kupplungskugel in den Innenraum des Querträgers hinein geschoben werden kann, um dort in seiner Ruhestellung bei Nichtgebrauch aufgenommen zu werden.

Die Aufnahme könnte dabei an beliebiger Stelle des Querträgers vorgesehen sein.

Eine vorteilhafte Lösung sieht vor, dass der Aufnahmeraum zwischen der Längsmittelebene und einer Versteifungseinheit liegt, zwischen der Trägerbasis und einer auf einer Seite der Längsmittelebene liegenden Versteifungseinheit.

Hinsichtlich weiterer Versteifungsmöglichkeiten des Querträgers wurden bislang keine näheren Angaben gemacht.

So sieht eine weitere vorteilhafte Lösung vor, dass der Querträger durch Diagonalstreben stabilisiert ist. Dabei sind Diagonalstreben solche Streben, die von einem Längsgurt zum anderen verlaufen.

Derartige Diagonalstreben können parallel zu einer Begrenzungsfläche des Querträgers verlaufen und somit flächenhafte Diagonalstreben sein.

Alternativ oder ergänzend dazu ist vorgesehen, dass die Diagonalstreben Raumdiagonalen des Querträgers darstellen, das heißt durch den Innenraum desselben hindurchverlaufen.

Die Längsgurte und die Streben können bei der erfindungsgemäßen Lösung aus Flachmaterialstücken oder Rundmaterialstücken aus Metall oder Verbundwerkstoff, insbesondere Faserverbundwerkstoff, ausgebildet sein.

Besonders günstig aus Gründen der Gewichtsersparnis ist es jedoch, wenn zumindest ein Teil der Längsgurte und Streben aus Rohrmaterial gebildet ist.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische Ansicht einer erfindungsgemäßen Anhängekupplung von hinten links;
- Fig. 2: eine Seitenansicht der erfindungsgemäßen Anhängekupplung von links;
- Fig. 3: eine perspektivische Ansicht der erfindungsgemäßen Anhängekupplung von hinten rechts;
- Fig. 4: eine Seitenansicht der erfindungsgemäßen Anhängekupplung von rechts;

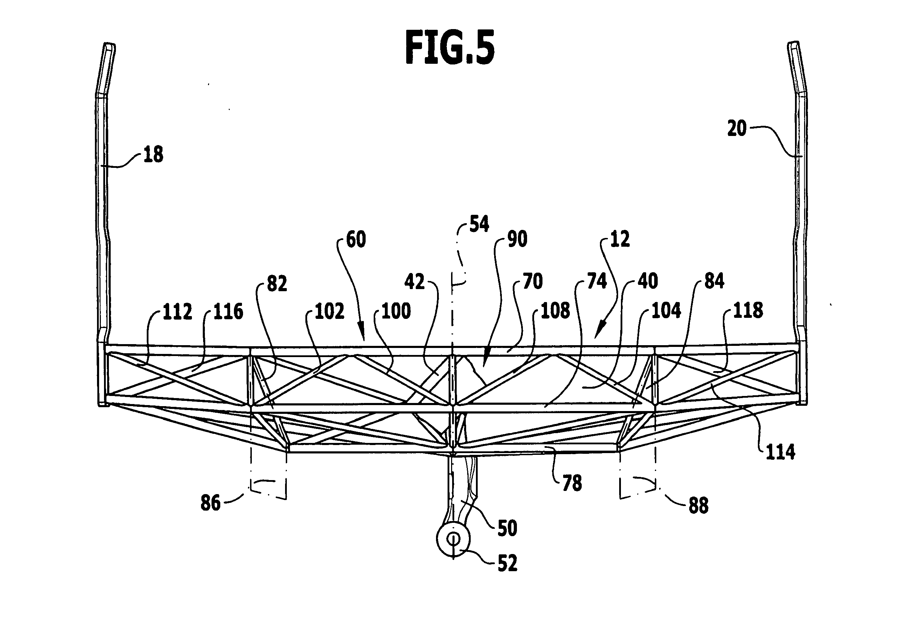

- Fig. 5: eine Draufsicht auf die erfindungsgemäße Anhängekupplung von oben;
- Fig. 6: eine Draufsicht auf die erfindungsgemäße Anhängekupplung von unten;
- Fig. 7: eine Draufsicht von oben auf ein zweites Ausführungsbeispiel einer erfindungsgemäßen Anhängekupplung;
- Fig. 8: eine Ansicht von hinten auf das zweite Ausführungsbeispiel der erfindungsgemäßen Anhängekupplung;
- Fig. 9: eine Ansicht von unten auf das zweite Ausführungsbeispiel der erfindungsgemäßen Anhängekupplung;
- Fig. 10: eine Ansicht von vorn auf das zweite Ausführungsbeispiel der erfindungsgemäßen Anhängekupplung;
- Fig. 11: einen Schnitt längs Linie 11-11 in Fig. 7 und
- Fig. 12: einen Schnitt längs Linie 12-12 in Fig. 7.

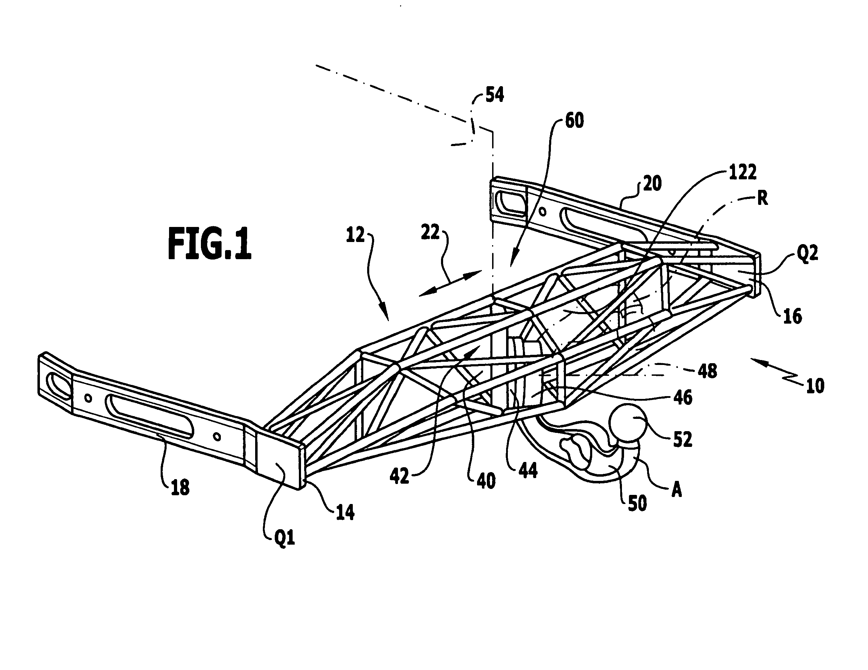

Ein in Fig. 1 dargestelltes erstes Ausführungsbeispiel einer erfindungsgemäßen Anhängekupplung, als Ganzes mit 10 bezeichnet, umfasst einen als Verstrebungsstruktur ausgeführten Querträger 12, welcher mit endseitigen Halteabschnitten 14, 16 von Seitenträgern 18, 20 verbunden ist, wobei über die Seitenträger 18, 20 eine Verbindung zur Fahrzeugkarosserie 26 erfolgt.

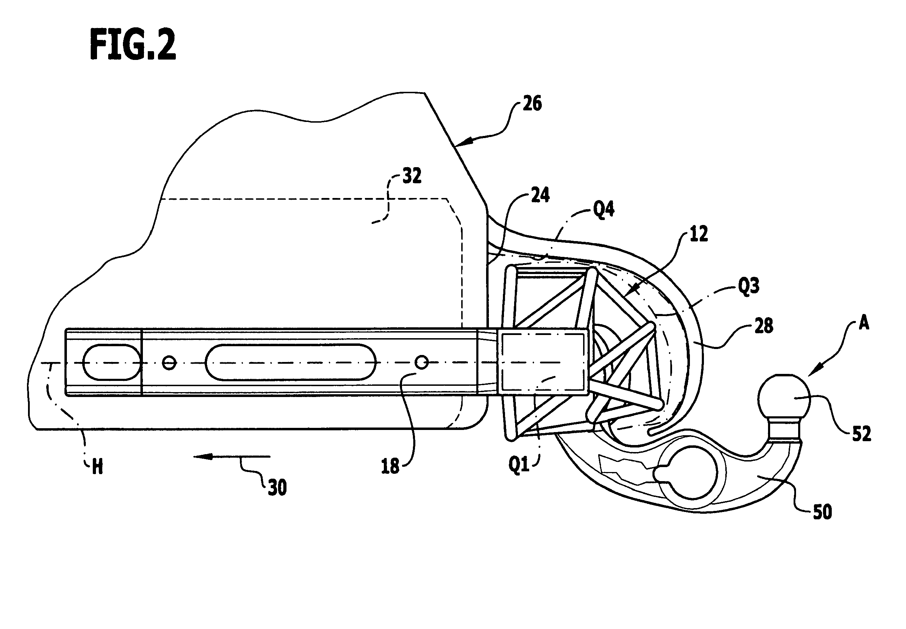

Im Gegenzug dazu erstreckt sich der Querträger 12 in seiner Längsrichtung 22, wie in Fig. 2 dargestellt, hinter einer Heckschürze 24 der als Ganzes mit 26 bezeichneten Fahrzeugkarosserie und wird überdeckt von einer Stoßfängereinheit 28, welche hinter der Heckschürze 24 quer zur Karosserie verläuft.

Dabei erstrecken sich die Seitenträger 18, 20 mit ihren Halteabschnitten 14, 16 ungefähr in Richtung einer Fahrtrichtung 30 entlang von üblicherweise als Träger oder Wände 32 ausgebildeten Elementen der Fahrzeugkarosserie 26 und sind mit diesen verbunden.

In einem von einer Außenkontur des Querträgers 12 umschlossenen Innenraum 40 desselben ist eine als Ganzes mit 42 bezeichnete Montagebasis vorgesehen, an welcher ein ebenfalls im Innenraum 40 liegendes Schwenklager 44 vorgesehen ist, an welchem ein Schwenkelement 46 des Schwenklagers 44 um die Schwenkachse 48 drehbar gelagert ist, wobei das Schwenkelement 46 fest mit einem Kugelhals 50 verbunden ist, welcher an seinem dem Schwenkelement 46 abgewandten Ende eine Kupplungskugel 52 zum Ankuppeln eines Anhängers für ein Kraftfahrzeug trägt.

Die Schwenkachse 48 verläuft dabei schräg zu einer Längsmittelebene 54 der Karosserie 26, wie dies beispielsweise in der europäischen Patentanmeldung 0 799 732 A2 beschrieben ist.

Damit kann der Kugelhals 50 von einer in Fig. 1 dargestellten Arbeitsstellung A, in welcher sich dieser, ausgehend von dem Schwenklager 44 im Innenraum 40 aus diesem heraus zwischen den Längsgurten 72 und 76 hindurch entgegengesetzt zur Fahrtrichtung 30, in im Wesentlichen in der oder symmetrisch zu der Längsmittelebene 54 erstreckt, in eine Ruhestellung R bewegt werden, in welcher der Kugelhals 50 in dem Innenraum 40 des Querträgers 12 angeordnet ist, wie in Fig. 1 gestrichelt angedeutet, so dass sich der Kugelhals 50 nach seinem Verschwenken um die Schwenkachse 48 in die Ruhestellung R zumindest in Teilbereichen näherungsweise in Richtung der Längsrichtung 22 von dem Schwenklager 44 weg erstreckt.

Um dem Querträger 12 eine möglichst optimale Stabilität zu verleihen, insbesondere zur Aufnahme der auf die Kupplungskugel 52 wirkenden Kräfte im Zugbetrieb des Anhängers, ist der Querträger 12 mit einer Querschnittsform versehen, die im Bereich der Seitenträger 18, 20 eine minimale Querschnittsfläche Q1, Q2 aufweist, wobei die Querschnittsfläche Q des Querträgers 12 von den Seitenträgern 18, 20 ausgehend in Richtung eines mittigen Bereichs 60 des Querträgers 12 zunimmt und, wie in Fig. 2 dargestellt, in dem mittigen Bereich 60 die Querschnittsform Q3 aufweist, die einem maximalen Querschnitt Q des Querträgers 12 entspricht.

Bei dem in Fig. 1 und 2 dargestellten Ausführungsbeispiel ist die maximale Querschnittsform Q3 im Bereich der Längsmittelebene 54 der Karosserie 26 erreicht, sie kann jedoch aber auch bereits außerhalb der Längsmittelebene 54 erreicht werden.

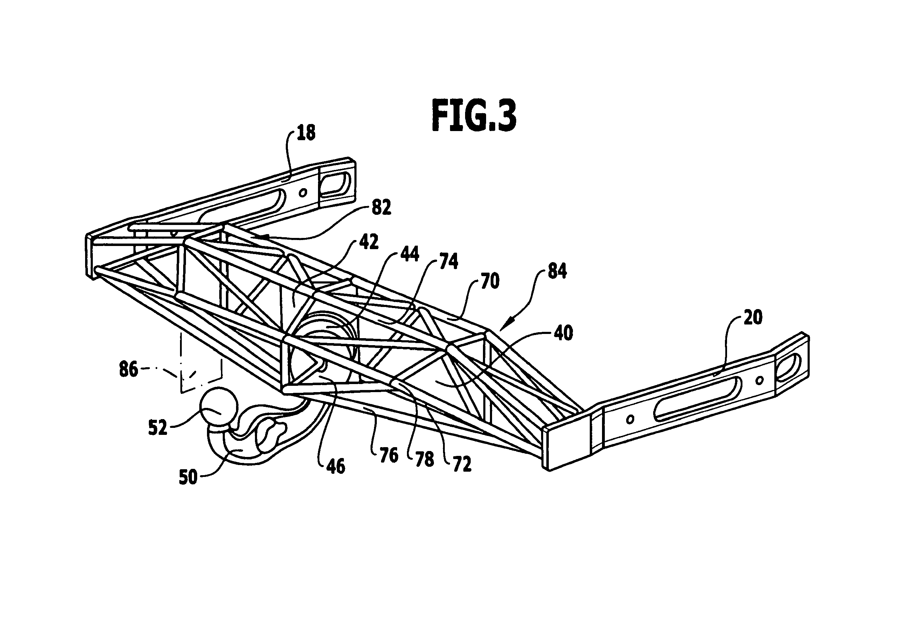

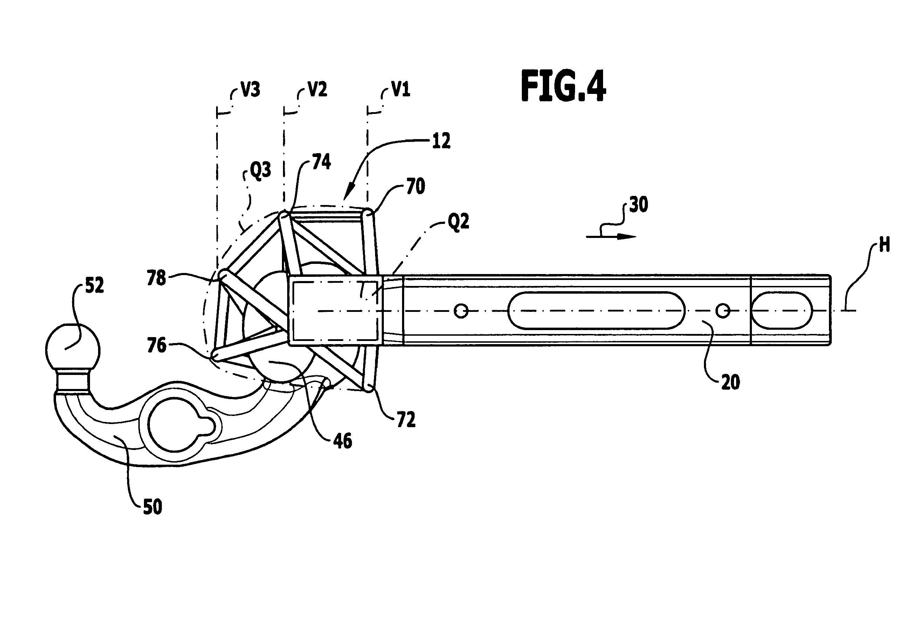

Wie in den Fig. 1 bis 4 dargestellt, ist der Querträger 12 gebildet durch einen fahrbahnabgewandten, in Fahrtrichtung 30 gesehen vorderen Längsgurt 70, der sich in Richtung der Längsrichtung 22 des Querträgers 12 erstreckt, einen fahrbahnzugewandten vorderen Längsgurt 72, einen fahrbahnabgewandten hinteren Längsgurt 74 sowie einen fahrbahnzugewandten hinteren Längsgurt 76 und einen zwischen dem fahrbahnzugewandten hinteren Längsgurt 76 und dem fahrbahnabgewandten hinteren Längsgurt 74 liegenden mittleren Längsgurt 78, die sich alle zwischen endseitigen Halteabschnitten 14, 16 der Seitenträger 18, 20 erstrecken.

Vorzugsweise liegen der fahrbahnabgewandte vordere Längsgurt 70 und der fahrbahnzugewandte vordere Längsgurt 72 nahe einer vorderen Vertikalebene V1, die sich parallel zur Längsrichtung 22 erstreckt, der fahrbahnabgewandte hintere Längsgurt 74 erreicht eine hinter der Vertikalebene V1 liegende und parallel zur Längsrichtung 22 verlaufende Vertikalebene V2, zumindest in dem mittigen Bereich 60 und außerdem erreichen der mittlere hintere Längsgurt 78 und der fahrbahnzugewandte hintere Längsgurt 76, zumindest im Bereich der Längsmittelebene 54 eine Vertikalebene V3, welche sich parallel zur Längsrichtung 22 erstreckt.

Vorzugsweise liegen die äußeren Querschnittsflächen Q1 und Q2 so, dass diese zwischen den Ebenen V1 und V2 liegen, während sich die Querschnittsfläche Q3 im mittigen Bereich 60 zwischen den Ebenen V1 bis V3 erstreckt.

Ferner liegen vorzugsweise die Querschnittsflächen Q1 und Q2 ungefähr symmetrisch zu einer horizontalen Ebene H, die ungefähr mittig die Seitenträger 16, 20 schneidet, während sich die Querschnittsfläche Q3 beiderseits der Horizontalebene H über die Querschnittsflächen Q1 und Q2 hinaus erstreckt.

Wie in Fig. 2 im Zusammenhang mit der Stoßfängereinheit 28 und der Heckschürze 24 dargestellt, ist die Querschnittsfläche Q3 so ausgebildet, dass diese zu mehr als 50%, vorzugsweise zu mehr als 70%, eine Querschnittsfläche Q4 ausfüllt, die durch einen zwischen der Heckschürze 24 und der Stoßfängereinheit 28 umschlossenen Raum gebildet ist.

Bei dem dargestellten Ausführungsbeispiel sind die Längsgurte 70, 72, 74, 76, 78 direkt mit den endseitigen Halteabschnitten 14, 16 der Seitenträger 18, 20, beispielsweise stoffschlüssig, verbunden, um eine möglichst kostengünstige und montagefreundliche Einheit zu schaffen.

Sollten jedoch Montageprobleme an der Fahrzeugkarosserie 26 auftreten, ist bei einer Alternative vorgesehen, die Längsgurte 70, 72, 74, 76, 78 mit sich parallel zu den Halteabschnitten 14, 16 erstreckenden Endplatten stoffschlüssig zu verbinden, die dann mit den Halteabschnitten 14, 16 bei der Montage an der Fahrzeugkarosserie 26 verbindbar sind.

Ferner sind die Längsgurte 70 bis 78 relativ zueinander noch durch quer zur Längsrichtung 22 verlaufende Versteifungseinheiten 82 und 84 versteift, die zumindest den fahrbahnabgewandten und fahrbahnzugewandten vorderen Längsgurt 70 und 72, den fahrbahnabgewandten hinteren Längsgurt 74 sowie den mittleren Längsgurt 78 miteinander verbinden.

Die Versteifungseinheiten 82 und 84 können dabei ebenfalls im einfachsten Fall durch in quer zur Längsrichtung 22 verlaufenden Flächen 86 bzw. 88 liegende Streben gebildet sein.

Ferner bildet die Montagebasis 42 ebenfalls noch Teil einer quer zur Längsrichtung 22 verlaufenden Versteifungseinheit 90, die im mittleren Bereich 60 angeordnet ist, wobei die Montagebasis 42 als Platte ausgebildet ist, die mit dem fahrbahnabgewandten vorderen Längsgurt 70, dem fahrbahnzugewandten vorderen Längsgurt 70 und dem fahrbahnabgewandeten hinteren Längsgurt 74 unmittelbar verbunden ist.

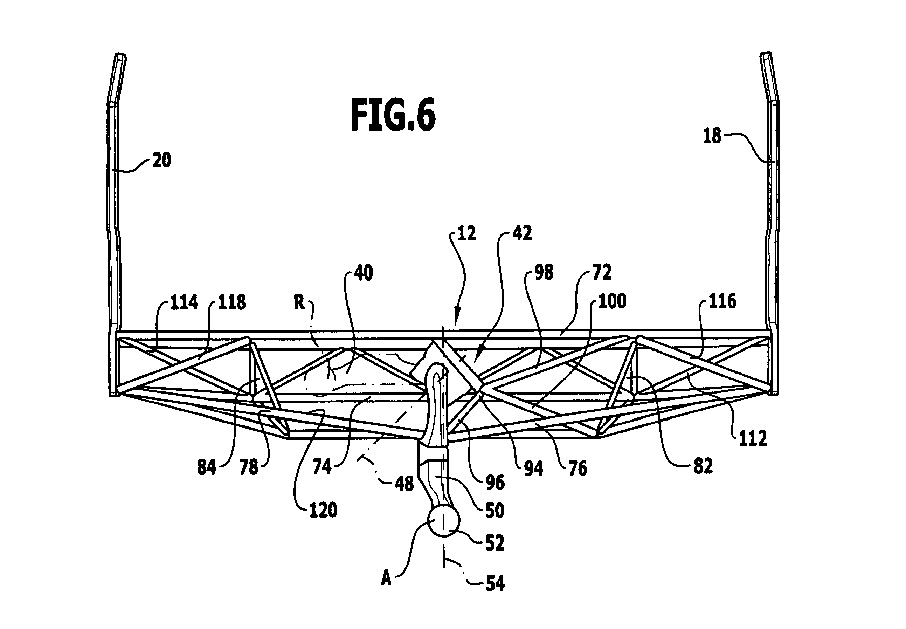

Darüber hinaus ist die Montagebasis 42, wie in Fig. 6 dargestellt, mit einem unteren fahrbahnzugewandten Endbereich 94 mittels einer Strebe 96 mit dem fahrbahnzugewandten hinteren Längsgurt 76 verbunden, mittels einer Strebe 98 mit dem dem fahrbahnzugewandten vorderen Längsgurt 72 und mittels einer Strebe 100 mit dem mittleren Längsgurt 78, so dass die Montagebasis 42 auch mit dem Endbereich 94 mit großer Steifigkeit in den Querträger 12 integriert ist.

Des weiteren ist der Querträger 12 vorzugsweise symmetrisch zur Längsmittelebene 54 noch mit zusätzlichen Diagonalstreben versteift, und zwar mit Diagonalstreben 102 und 104 bzw. 106 und 108 zwischen dem fahrbahnabgewandten vorderen Längsgurt 70 und dem fahrbahnabgewandten hinteren Längsgurt 74, mit Diagonalstreben 112 und 114 dem fahrbahnabgewandten hinteren Längsgurt 74 und dem fahrbahnabgewandten vorderen Längsgurt 70 sowie mit Diagonalstreben 116 und 118 zwischen dem fahrbahnzugewandten vorderen Längsgurt 72 und dem fahrbahnzugewandten hinteren Längsgurt 76.

Insbesondere bildet jedoch bei dem erfindungsgemäßen Querträger 12 der Innenraum 40 einen Aufnahmeraum 122 zwischen der Montagebasis 42 und der Versteifungseinheit 84, der frei von Diagonalstreben ist, dass in dem Aufnahmeraum 122 der Kugelhals 50 in seiner Ruhestellung R angeordnet werden kann, wie in Fig. 6 dargestellt, wobei der Kugelhals 50 durch Schwenken um die Schwenkachse 48 von der Arbeitsstellung A über eine Öffnung 120 in den Aufnahmeraum 122 hineinbewegbar ist, wobei die Öffnung 120 zwischen dem fahrbahnzugewandten hinteren Längsgurt 74, dem fahrbahnzugewandten vorderen Längsgurt 72 sowie der Montagebasis 42 und der Versteifungseinheit 84 liegt um den Kugelhals 50 ungehindert zwischen der Arbeitsstellung A und der Ruhestellung R durch die Öffnung 120 in den Innenraum 40 hinein und aus diesem durch die Öffnung 120 wieder herausbewegen zu können.

Vorzugsweise lässt sich auch der Innenraum 40 zwischen der Montagebasis 42 und der Versteifungseinheit 82 noch ausnutzen, beispielsweise für Antriebseinheiten für Bewegen des Kugelhalses 50 zwischen der Arbeitsstellung A und der Ruhestellung R oder für Betätigungseinheiten, insbesondere umfassend eine Steuerung zum Verschwenken des Kugelhalses 50.

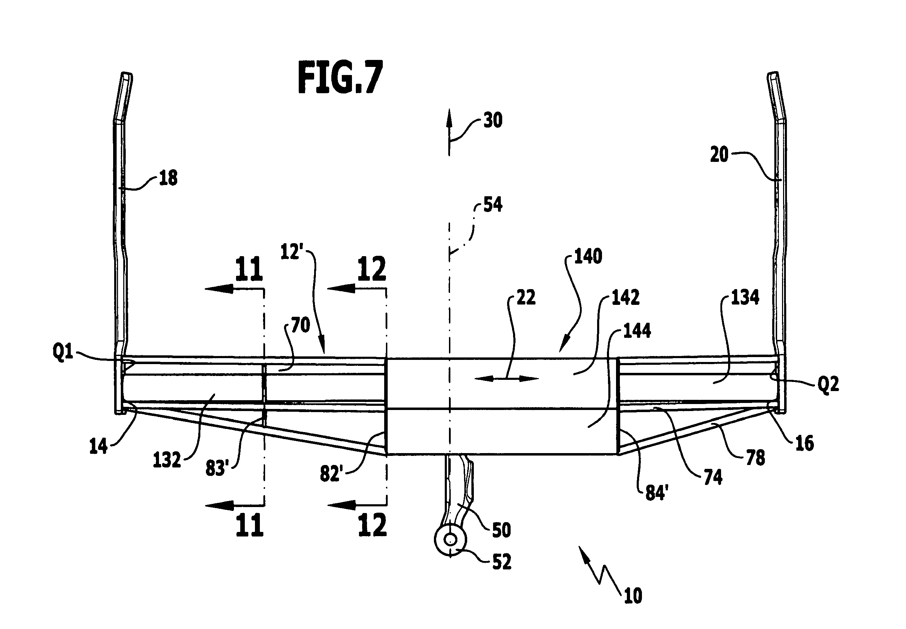

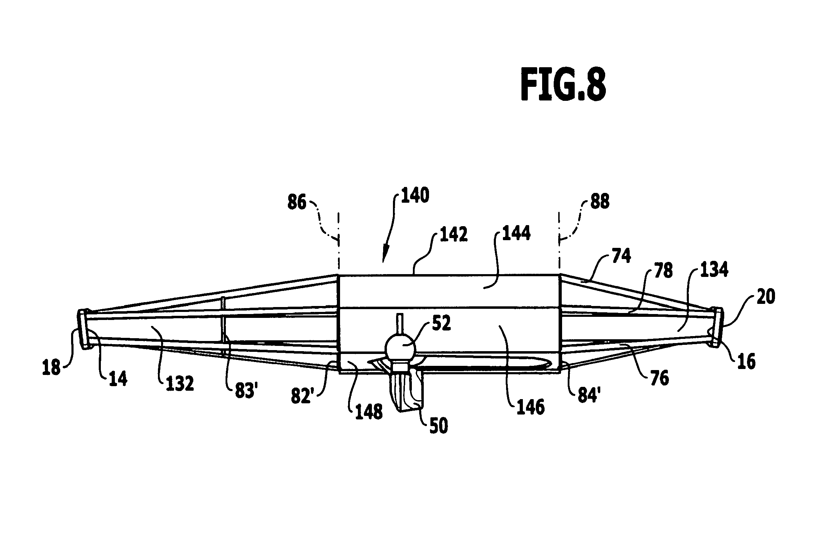

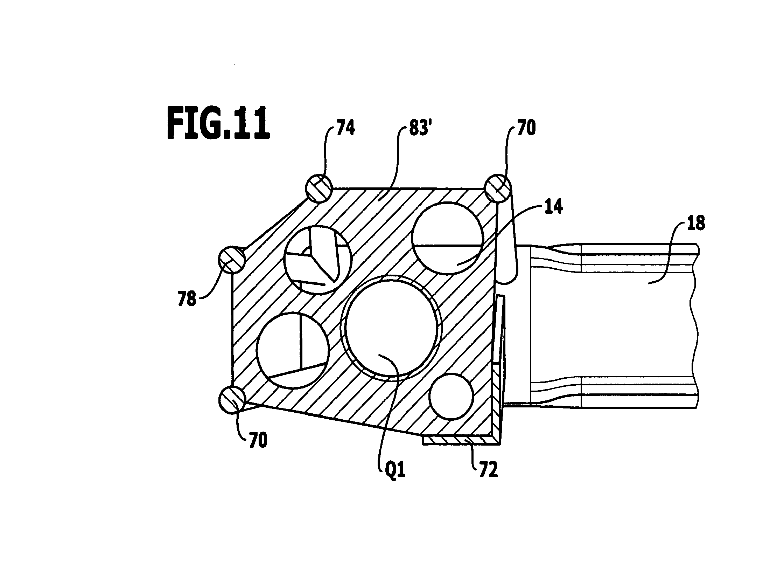

Bei einem zweiten Ausführungsbeispiel einer erfindungsgemäßen Anhängekupplung, dargestellt in den Fig. 7 bis 11 ist der Querträger 12' ebenfalls als Verstrebungsstruktur ausgebildet, und mit endseitigen Halteabschnitten 14 und 16 von Seitenträgern 18, 20 verbunden, über welche eine Verbindung zur Fahrzeugkarosserie 26 erfolgt.

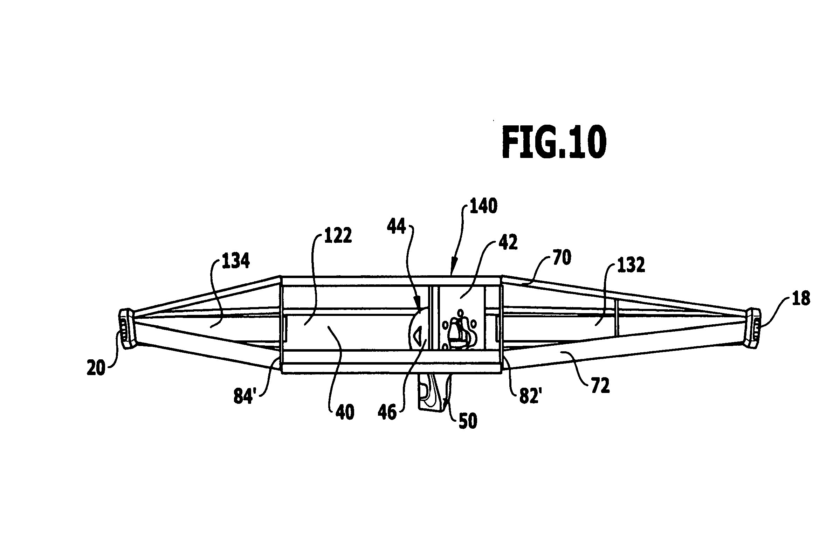

Wie in Fig. 10 dargestellt, ist ebenfalls in dem Innenraum 40 des Querträgers 12' die als Ganzes mit 42 bezeichnete Montagebasis vorgesehen, an welcher ein im Innenraum 40 liegendes Schwenklager 44 vorgesehen ist, an welchem ein Schwenkelement 46 des Schwenklagers 44 um die Schwenkachse 48 drehbar gelagert ist, wobei das Schwenkelement fest mit dem Kugelhals 50 verbunden ist, welcher an seinem dem Schwenkelement 46 abgewandten Ende die Kupplungskugel 52 zum Ankuppeln eines Anhängers für das Kraftfahrzeug trägt.

Die Schwenkachse 48 verläuft dabei in gleicher Weise wie beim ersten Ausführungsbeispiel.

Um dem Querträger 12' eine möglichst hohe Stabilität zu verleihen, sind wie beim ersten Ausführungsbeispiel der der Fahrbahn abgewandte, in Fahrtrichtung 30 gesehen vordere Längsgurt 70 - ausgebildet als Runmaterial - der der Fahrbahn zugewandte vordere Längsgurt 72 - ausgebildet bei diesem Ausführungsbeispiel als im Querschnitt L-förmiges Winkelmaterial - der der Fahrbahn abgewandte hintere Längsgurt 74, der der Fahrbahn zugewandte hintere Längsgurt 76 und der mittlere Längsgurt 78 vorgesehen, die die sich jeweils ausgehend von den Halteabschnitten 14, 16 der Seitenträger 18, 20 erstrecken.

Dabei sind vorzugsweise alle Längsgurte 72 bis 78 als sich über die gesamte Längsrichtung 22 des Querträgers 12' erstreckende Längsgurte ausgebildet.

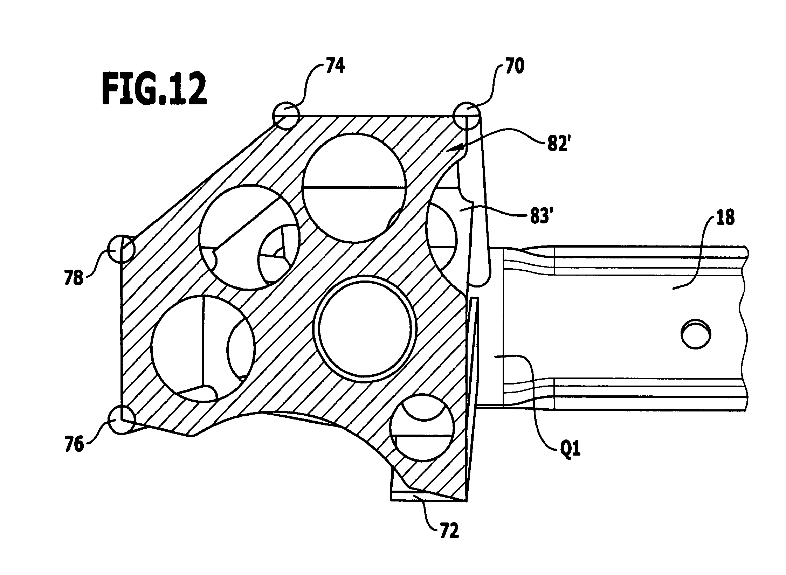

Zur Stabilisierung der Längsgurte relativ zueinander sind beiderseits des Aufnahmeraums 122 für den Kugelhals 50 in seiner Ruhestellung R, welcher einen Teilbereich des Innenraums 40 darstellt, Versteifungseinheiten 82' und 84' vorgesehen, welche, wie in Fig. 12 exemplarisch am Beispiel der Versteifungseinheit 82' dargestellt, als plattenförmige Teile ausgebildet sind, die sich in Flächen 86 und 88 erstrecken und jeweils mit den Längsgurten 70 bis 78 fest verbunden sind.

Im Gegensatz zum ersten Ausführungsbeispiel sind bei dem zweiten Ausführungsbeispiel keine Diagonalstreben zwischen den Längsgurten 70 bis 78 vorgesehen, sondern die Versteifungseinheiten 82' und 84' sind über Torsionsversteifungsrohre 132, 134 torsionssteif mit den Halteabschnitten 14, 16 der Seitenträgern 18, 20 verbunden, wobei die Torsionsversteifungsrohre 132, 134 einerseits torsionsfest an den Halteabschnitten 14, 16 und andererseits torsionsfest an den Versteifungseinheiten 82, 84 gehalten sind, so dass durch die Torsionsversteifungsrohre 132, 134 eine Verdrehung der Versteifungseinheiten 82', 84' gegenüber den Halteabschnitten 14, 16 weitgehend verhindert wird.

Ferner ist zwischen der Versteifungseinheit 82' und dem Halteabschnitt 14 noch eine weitere Versteifungseinheit 83' vorgesehen, die ähnlich wie die Versteifungseinheit 82' mit den Längsgurten 70 bis 78 fest verbunden ist und außerdem ebenfalls auch noch fest mit dem Torsionsversteifungsrohr 132 verbunden ist, um ebenfalls gegenüber dem Halteabschnitt 14 torsionssteif festgelegt zu sein.

Um den Querträger 12' auch zwischen den Versteifungseinheiten 82', 84' torsionssteif auszubilden, ohne den Aufnahmeraum 112 für den Kugelhals 50 in seiner Ruhestellung zu beschränken, sondern im Gegenteil, einen maximalen Aufnahmeraum 122 für den Kugelhals 50 zur Verfügung stellen zu können, sind im Bereich zwischen den Versteifungseinheiten 82', 84' die Längsgurte 70 bis 78 durch einen dem Aufnahmeraum ähnlich einer Teilschale umgebenden Mantelkörper 140 verbunden, welcher ein Flächenelement 142 aufweist, das sich zwischen dem Längsgurt 70 und dem Längsgurt 74 erstreckt, ein Flächenelement 144 aufweist, das sich zwischen dem Längsgurt 74 und dem Längsgurt 78 erstreckt, ein Flächenelement 146 aufweist, welches sich zwischen dem Längsgurt 78 und dem Längsgurt 76 erstreckt, und ein Flächenelement 148 aufweist, welches sich zwischen dem Längsgurt 76 und dem Längsgurt 72 erstreckt.

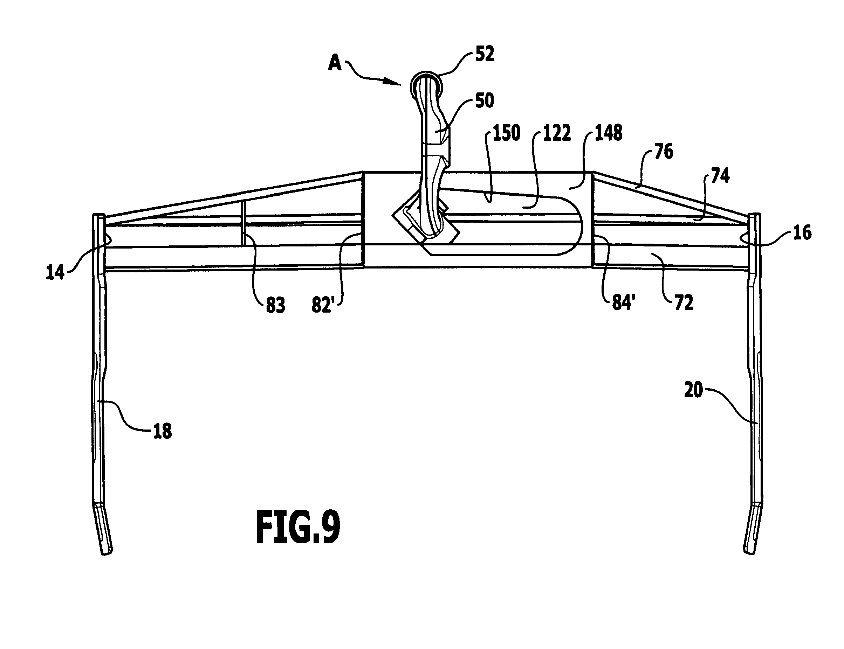

Dabei ist das Flächenelement 148 mit einem Durchbruch 150 versehen, welcher es erlaubt, den Kugelhals 50 von der in Fig. 9 durchgezogen gezeichneten Arbeitsstellung A in seine Ruhestellung im Aufnahmeraum 22 zu bewegen.

Vorzugsweise sind sämtliche Flächenelemente 142 bis 148 als aus einem Flachmaterialstück gebildete Flächenelemente gebildet, so dass diese untereinander zusammenhängen und nicht nur mit den Längsgurten 70, 74, 78, 76, 72 verbunden sind, sondern auch noch mit den Versteifungseinheiten 82' und 84', so dass der Mantelkörper 140 insgesamt ebenfalls ein Torsionsversteifungselement bildet, das die Versteifungselemente 82' und 84' gegeneinander torsionssteif ausgerichtet hält, und dem Aufnahmeraum 122 die maximale Größe zwischen den Längsgurten 70 bis 78 verleiht.

Bei dem zweiten Ausführungsbeispiel gemäß Fig. 7 bis 12 liegen dabei die Versteifungseinheiten 82' und 84' bezogen auf die Längsmittelebene 54 asymmetrisch, was dadurch bedingt ist, dass die Montagebasis 42 in dem Abschnitt des Querträgers 12' zwischen den Versteifungseinheiten 82 ' und 84' aneordnet ist, jedoch nahe der Versteifungseinheit 82' liegt, so dass sich letztlich der Aufnahmeraum 122 für den Kugelhals 50 in Ruhestellung R zwischen der Montagebasis 42 und der Versteifungseinheit 84' erstreckt.

Vorzugsweise ist die Montagebasis 42 ebenfalls mit dem Mantelkörper 140 verbunden, dient jedoch ihrerseits nicht unmittelbar zur Bildung einer zusätzlichen Versteifungseinheit für die Längsgurte 70 bis 78.

Hinsichtlich der Variation der Querschnitte des Querträgers ist auch beim zweiten Ausführungsbeispiel vollinhaltlich auf die Ausführungen zum ersten Ausführungsbeispiel zu verweisen, da der Querschnitt des Querträgers sich entsprechend dem ersten Ausführungsbeispiel verhält.

Im Übrigen ist hinsichtlich aller übrigen Merkmale des zweiten Ausführungsbeispiels - insoweit als im Zusammenhang mit diesem keine zusätzlichen Angaben gemacht wurden - auf die Ausführungen zum ersten Ausführungsbeispiel verwiesen, insbesondere wenn die Elemente des zweiten Ausführungsbeispiels dieselben Bezugszeichen tragen wie beim ersten Ausführungsbeispiel.

## Patentansprüche

1. Kraftfahrzeug mit einer Anhängekupplung, wobei die Anhängekopplung einen als Verstrebungsstruktur ausgeführten und hinter einer Heckschürze (24) der Fahrzeugkarosserie (26) des Kraftfahrzeugs und von einer Stoßfängereinheit (28) überdeckt montierbaren Querträger (12), zwei an der Fahrzeugkarosserie (26) montierbare und den Querträger (12) mit der Fahrzeugkarosserie (26) verbindende Seitenträger (18, 20) sowie einen am Querträger (12) gehaltenen Kugelhals (50) umfasst,
**dadurch gekennzeichnet, dass** der Querträger (12) eine Montagebasis (42) aufweist, die in einem Innenraum (40) des Querträgers (12) angeordnet ist und den Kugelhals (50) trägt, und dass der Kugelhals (50) in seiner Ruhestellung (R) bei Nichtgebrauch im Innenraum (40) des Querträgers (12) deponiert, ist, welcher einen Aufnahmeraum (122) für den Kugelhals (50) in der Ruhestellung (R) bildet.

2. Kraftfahrzeug nach Anspruch 1, **dadurch gekennzeichnet, dass** der Querträger (12) im Bereich der Seitenträger (18, 20) einen minimalen Querschnitt (Q1, Q2) aufweist und dass der Querträger (12) in einem mittigen Bereich (60) einen maximalen Querschnitt (Q3) aufweist, der größer ist als der minimale Querschnitt.

3. Kraftfahrzeug nach Anspruch 2, **dadurch gekennzeichnet, dass** sich der Querschnitt (Q) des Querträgers (12) in dessen Verlauf von den Seitenträgern (18, 20) bis zum mittigen Bereich (60) zunehmend vergrößert.

4. Kraftfahrzeug nach Anspruch 2 oder 3, **dadurch gekennzeichnet, dass** sich der Querschnitt (Q) des Querträgers (12) in dessen Verlauf von den Seitenträgern (18, 20) bis zu einem maximalen Querschnitt (Q3) im mittigen Bereich (60) um einen Faktor von mindestens zwei vergrößert.

5. Kraftfahrzeug nach einem der Ansprüche 2 bis 4, **dadurch gekennzeichnet, dass** der Querträger (12) mindestens einen vorderen und mindestens einen hinteren Längsgurt (70, 72; 74, 76) aufweist.

6. Kraftfahrzeug nach Anspruch 5, **dadurch gekennzeichnet, dass** sich der jeweilige Längsgurt (70, 72, 74, 76, 78) zwischen Halteabschnitten (14, 16) der Seitenträger (18, 20) erstreckt.

7. Kraftfahrzeug nach einem der Ansprüche 5 oder 6, **dadurch gekennzeichnet, dass** der Querträger (12) mindestens eine zwischen mindestens einem Teil der Längsgurte (70, 72, 74, 76, 78) wirksame Versteifungseinheit (82, 83, 84, 90) aufweist.

8. Kraftfahrzeug nach Anspruch 7, **dadurch gekennzeichnet, dass** die Versteifungseinheit (82, 83', 84, 90) sich zweidimensional in einer Fläche (86, 88) erstreckt und insbesondere in dieser zweidimensional versteifend wirkt.

9. Kraftfahrzeug nach einem der Ansprüche 2 bis 8, **dadurch gekennzeichnet, dass** der Querträger (12') mit Torsionsversteifungselementen (132, 134) versehen ist.

10. Kraftfahrzeug nach Anspruch 9 soweit dieser sich direkt oder indirekt auf Anspruch 6 bezieht,
**dadurch gekennzeichnet, dass** sich die Torsionsversteifungselemente (132, 134), ausgehend von den Halteabschnitten (14, 16) der Seitenträger (18, 20), zu mindestens einer Versteifungseinheit (82', 83', 84') erstrecken und mit dem jeweiligen Halteabschnitt (14, 16) und der mindestens einen Versteifungseinheit (82', 84') torsionsfest verbunden sind.

11. Kraftfahrzeug nach einem der Ansprüche 5-8, 10 oder 9, soweit letzterer sich direkt oder indirekt auf Anspruch 5 bezieht, **dadurch gekennzeichnet, dass** mindestens zwei der Längsgurte (70, 72, 74, 76, 78) durch sich parallel zu Längsabschnitten der Längsgurte (70, 72, 74, 76, 78) zweidimensional erstreckende und zweidimensional versteifende Flächenelemente (142, 144, 146, 148) miteinander verbunden sind.

12. Kraftfahrzeug nach Anspruch 11, **dadurch gekennzeichnet, dass** mindestens eines der Flächenelemente (142, 144, 146, 148) als Versteifung im Bereich des Aufnahmeraums (122) für den Kugelhals (50) angeordnet ist.

13. Kraftfahrzeug nach Anspruch 12, **dadurch gekennzeichnet, dass** der Aufnahmeraum (122) für den Kugelhals (50) auf mehreren Seiten durch Flächenelemente (142, 144, 146, 148) begrenzt ist.

## Claims

1. Motor vehicle with a tailer coupling, wherein the trailer coupling comprises a cross beam (12), which is configured as a bracing structure and is mountable behind a rear panel (24) of the vehicle body (26) of the motor vehicle and is covered by a bumper unit (28), two side beams (18, 20), which are mountable on the vehicle body (26) and connect the cross beam (12) to the vehicle body (26), and also a ball neck (50) held on the cross beam (12),
**characterised in that** the cross beam (12) has a mounting base (42), which is arranged in an interior (40) of the cross beam (12) and carries the ball neck (50), and that when not in use the ball neck (50) is stowed in its resting position (R) in the interior (40) of the cross beam (12), which interior forming a receiving space (122) for the ball neck (50) in the resting position (R).

2. Motor vehicle according to claim 1, **characterised in that** the cross beam (12) has a minimum cross-section (Q1, Q2) in the region of the side beams (18, 20) and that in a central region (60) the cross beam (12) has a maximum cross-section (Q3), which is larger than the minimum cross-section.

3. Motor vehicle according to claim 2, **characterised in that** the cross-section (Q) of the cross beam (12) increases in size progressively in its course from the side beams (18, 20) to the central region (60).

4. Motor vehicle according to claim 2 or 3, **characterised in that** the cross-section (Q) of the cross beam (12) increases in size by a factor of at least two in its course from the side beams (18, 20) to a maximum cross-section (Q3) in the central region (60).

5. Motor vehicle according to one of claims 2 to 4, **characterised in that** the cross beam (12) has at least one front and at least one rear longitudinal brace (70, 72; 74, 76).

6. Motor vehicle according to claim 5, **characterised in that** the respective longitudinal brace (70, 72, 74, 76, 78) extends between holding sections (14, 16) of the side beams (18, 20).

7. Motor vehicle according to one of claims 5 or 6, **characterised in that** the cross beam (12) has at least one reinforcing unit (82, 83, 84, 90) acting between at least part of the longitudinal braces (70, 72, 74, 76, 78).

8. Motor vehicle according to claim 7, **characterised in that** the reinforcing unit (82, 83', 84, 90) extends two-dimensionally in a surface (86, 88) and in particular has a two-dimensional reinforcing action in this.

9. Motor vehicle according to one of claims 2 to 8, **characterised in that** the cross-beam (12') is provided with torsional reinforcing elements (132, 134).

10. Motor vehicle according to claim 9, where the latter refers directly or indirectly to claim 6, **characterised in that**, starting from the holding sections (14, 16) of the side beams (18, 20), the torsional reinforcing elements (132, 134) extend to at least one reinforcing unit (82', 83', 84') and are connected in a torsionally fixed manner to the respective holding section (14, 16) and the at least one reinforcing unit (82', 84').

11. Motor vehicle according to one of claims 5-8, 10 or 9, where the latter refers directly or indirectly to claim 5, **characterised in that** at least two of the longitudinal braces (70, 72, 74, 76, 78) are connected to one another by means of two-dimensionally reinforcing surface elements (142, 144, 146, 148) extending two-dimensionally parallel to longitudinal sections of the longitudinal braces (70, 72, 74, 76, 78).

12. Motor vehicle according to claim 11, **characterised in that** at least one of the surface elements (142, 144, 146, 148) is arranged as reinforcement in the region of the receiving space (122) for the ball neck (50).

13. Motor vehicle according to claim 12, **characterised in that** the receiving space (122) for the ball neck (50) is delimited on a plurality of sides by surface elements (142, 144, 146, 148).

## Revendications

1. Véhicule automobile pourvu d'un dispositif d'attelage de remorque, ledit dispositif d'attelage de remorque comprenant une traverse (12) réalisée comme structure d'entretoisement, montable derrière une jupe arrière (24) de la carrosserie (26) du véhicule en étant recouverte par une unité de pare-choc (28), deux longerons (18, 20) montables sur la carrosserie (26) du véhicule et raccordant la traverse (12) à la carrosserie (26) du véhicule, ainsi qu'un col de boule d'attelage (50) maintenu contre la traverse (12),
**caractérisé en ce que** la traverse (12) comporte une base de montage (42) disposée dans un espace intérieur (40) de la traverse (12) et qui supporte le col de boule d'attelage (50), et **en ce que**, dans sa position de repos (R) en cas d'inutilisation, le col de boule d'attelage (50) est rabattu dans l'espace intérieur (40) de la traverse (12), lequel forme un espace de réception (122) pour le col de boule d'attelage (50) en position de repos (R).

2. Véhicule automobile selon la revendication 1, **caractérisé en ce que** la traverse (12) présente une section (Q1, Q2) minimale au niveau des longerons (18, 20), et **en ce que** la traverse (12) présente une section (Q3) maximale dans une zone centrale (60), ladite section (Q3) maximale étant supérieure à la section minimale.

3. Véhicule automobile selon la revendication 2, **caractérisé en ce que** la section (Q) de la traverse (12) augmente progressivement sur son extension depuis les longerons (18, 20) jusqu'à la zone centrale (60).

4. Véhicule automobile selon la revendication 2 ou la revendication 3, **caractérisé en ce que** la section (Q) de la traverse (12) augmente au moins d'un facteur deux sur son extension depuis les longerons (18, 20) jusqu'à une section (Q3) maximale dans la zone centrale (60).

5. Véhicule automobile selon l'une des revendications 2 à 4, **caractérisé en ce que** la traverse (12) comporte au moins une membrure longitudinale avant et au moins une membrure longitudinale arrière (70, 72 ; 74, 76).

6. Véhicule automobile selon la revendication 5, **caractérisé en ce que** chaque membrure longitudinale (70, 72, 74, 76, 78) s'étend entre les parties de maintien (14, 16) des longerons (18, 20).

7. Véhicule automobile selon la revendication 5 ou la revendication 6, **caractérisé en ce que** la traverse (12) comporte au moins une unité de renforcement (82, 83, 84, 90) agissant entre au moins une partie des membrures longitudinales (70, 72, 74, 76, 78).

8. Véhicule automobile selon la revendication 7, **caractérisé en ce que** l'unité de renforcement (82, 83', 84, 90) s'étend bidimensionnellement dans une surface (86, 88) et a une action de renforcement bidimensionnelle en particulier dans celle-ci.

9. Véhicule automobile selon l'une des revendications 2 à 8, **caractérisé en ce que** la traverse (12') est pourvue d'éléments de renfort contre la torsion (132, 134).

10. Véhicule automobile selon la revendication 9, pour autant que celle-ci se rapporte directement ou indirectement à la revendication 6, **caractérisé en ce que** les éléments de renfort contre la torsion (132, 134) s'étendent depuis les parties de maintien (14, 16) des longerons (18, 20) jusqu'à au moins une unité de renforcement (82', 83', 84'), et sont raccordés chacun de manière résistante à la torsion à la partie de maintien (14, 16) correspondante, et à l'unité ou aux unités de renforcement (82', 84').

11. Véhicule automobile selon l'une des revendications 5 à 8, 10 ou 9, pour autant que cette dernière se rapporte directement ou indirectement à la revendication 5, **caractérisé en ce qu'**au moins deux des membrures longitudinales (70, 72, 74, 76, 78) sont raccordées entre elles par des éléments de surface (142, 144, 146, 148) s'étendant bidimensionnellement parallèlement aux longueurs des membrures longitudinales (70, 72, 74, 76, 78) et ayant une action de renforcement bidimensionnelle.

12. Véhicule automobile selon la revendication 11, **caractérisé en ce qu'**au moins un des éléments de surface (142, 144, 146, 148) est disposé comme renforcement au niveau d'un espace de réception (122) pour le col de boule d'attelage (50).

13. Véhicule automobile selon la revendication 12, **caractérisé en ce que** l'espace de réception (122) pour le col de boule d'attelage (50) est délimité par des éléments de surface (142, 144, 146, 148) sur plusieurs côtés.
